# FASCICULE DE BREVET EUROPEEN

(11) **EP 2 910 428 B1**
(45) Date de publication et mention de la délivrance du brevet: **16.11.2016**
(21) Numéro de dépôt: 15152023.6
(22) Date de dépôt: 21.01.2015
(51) Int. Cl.: B60R 9/04

(54) **Agencement de moyens de fixation d'une barre de toit de véhicule automobile**
Anordnung von Befestigungsmitteln eines Dachgepäckträgerholms eines Kraftfahrzeugs
Arrangement of means for attaching a motor vehicle roof bar

(30) Priorité: 04.02.2014 FR 1450832
(43) Date de publication de la demande: 26.08.2015
(73) Titulaire: PEUGEOT CITROËN AUTOMOBILES SA, 78140 Vélizy-Villacoublay (FR)
(72) Inventeur: Villa, Laurent, 91460 Marcoussis (FR); Parody, Bruno, 78210 Saint-Cyr L'école (FR)

(56) Documents cités:
- DE-A1- 19 542 109
- DE-A1-102012 009 173
- DE-U1- 20 316 215

## Description

L'invention concerne un agencement de moyens de fixation d'un élément sur une paroi double. Plus particulièrement, l'invention concerne un agencement de moyens de fixation d'une barre de toit sur le pavillon d'un véhicule automobile.

Certains véhicules automobiles sont équipés de barres de toit longitudinales. Ces barres sont généralement fixées sur le toit du véhicule à une distance telle des bords latéraux du toit que les pieds des barres de toit sont inclinés vers l'extérieur du toit. Il résulte de cette inclinaison et du jeu existant entre les moyens de fixation et les bords de orifices formés dans le toit pour recevoir les moyens de fixation, ainsi que de la souplesse de la doublure du toit une tendance de déversement des barres de toit dès qu'elles soient sous la charge d'objets positionnés sur le toit. Ce déversement peut également être décrit comme une rotation de chacune des barres de toit autour de leur axe longitudinal respectif.

Le but de l'invention est de proposer une solution qui permette de supprimer cette rotation des barres de toit.

Le document DE 10 2012 009 173 A1 décrit un agencement de moyens de fixation d'un élément tel qu'une barre de toit, agencement présentant les caractéristiques du préambule de la revendication 1.

Le but de l'invention est atteint avec un agencement de moyens de fixation d'un élément tel qu'une barre de toit présentant l'ensemble des caractéristiques de la revendication 1.

Selon le mode de réalisation choisi de l'agencement selon l'invention, ce dernier peut également avoir une au moins des caractéristiques suivantes, considérée isolément ou en combinaison :
- le fût de fixation est réalisé en une matière incompressible ;
- le fût de fixation est une bague anti-fluage en acier ;
- le fût de fixation est solidaire de l'élément par surmoulage ;
- l'écrou de l'ensemble vis/écrou est retenu en place sous la seconde paroi ;
- l'écrou de l'ensemble vis/écrou est serti sous la seconde paroi ;
- l'écrou de l'ensemble vis/écrou est soudé sous la seconde paroi ;
- la différence entre que le diamètre extérieur du fût de fixation et le diamètre du premier orifice est inférieure à 0,5 mm.

Le but de l'invention est également atteint avec une barre de toit pour un véhicule automobile ayant un pavillon à paroi double, comprenant au moins deux pieds et des moyens de fixation comportant, pour chaque pied, un fût de fixation solidaire du pied de la barre de toit et traversant une première des deux parois du pavillon par un premier orifice pour prendre appui axialement sur la seconde des deux parois, et un ensemble vis/écrou dont la vis est logée à l'intérieur du fût de fixation et dépasse des deux extrémités opposées du fût de fixation de façon à traverser la seconde paroi de la structure par un second orifice, le fût de fixation présentant un jeu entre la vis de l'ensemble vis/écrou et une face intérieure du fût de fixation et un diamètre extérieur du fût de fixation étant sensiblement égal au diamètre du premier orifice, de sorte que le fût de fixation traverse le premier orifice sensiblement sans jeu.

De même, le but de l'invention est atteint avec un véhicule automobile équipé de deux barres de toit longitudinales, le véhicule automobile ayant un pavillon à paroi double et chacune des barres de toit ayant au moins deux pieds par lesquels elle est fixée sur le pavillon à l'aide de moyens de fixation comprenant, pour chaque pied, un fût de fixation solidaire du pied de la barre de toit et traversant une première des deux parois du pavillon par un premier orifice pour prendre appui axialement sur la seconde des deux parois, et un ensemble vis/écrou dont la vis est logée à l'intérieur du fût de fixation et dépasse des deux extrémités opposées du fût de fixation de façon à traverser la seconde paroi de la structure par un second orifice, le fût de fixation présentant un jeu entre la vis de l'ensemble vis/écrou et une face intérieure du fût de fixation et un diamètre extérieur du fût de fixation étant sensiblement égal au diamètre du premier orifice, de sorte que le fût de fixation traverse le premier orifice sensiblement sans jeu.

D'autres caractéristiques et les avantages de la présente invention apparaîtront dans la description explicative qui va suivre faite en référence aux dessins annexés donnés uniquement à titre d'exemple et dans lesquels :
- la figure 1 représente une barre de toit longitudinale fixée sur le toit d'un véhicule automobile,
- la figure 2 représente un agencement traditionnel de moyens de fixation de la barre de toit de la figure 1, c'est-à-dire sans recours à l'invention, et
- la figure 3 représente un agencement selon la présente invention de moyens de fixation de la barre de toit de la figure 1.

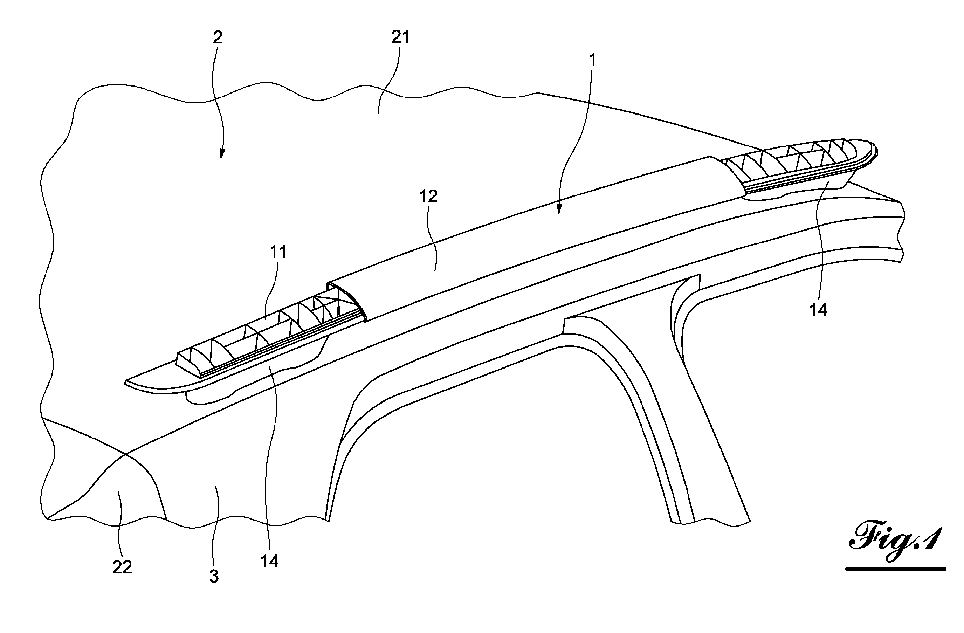

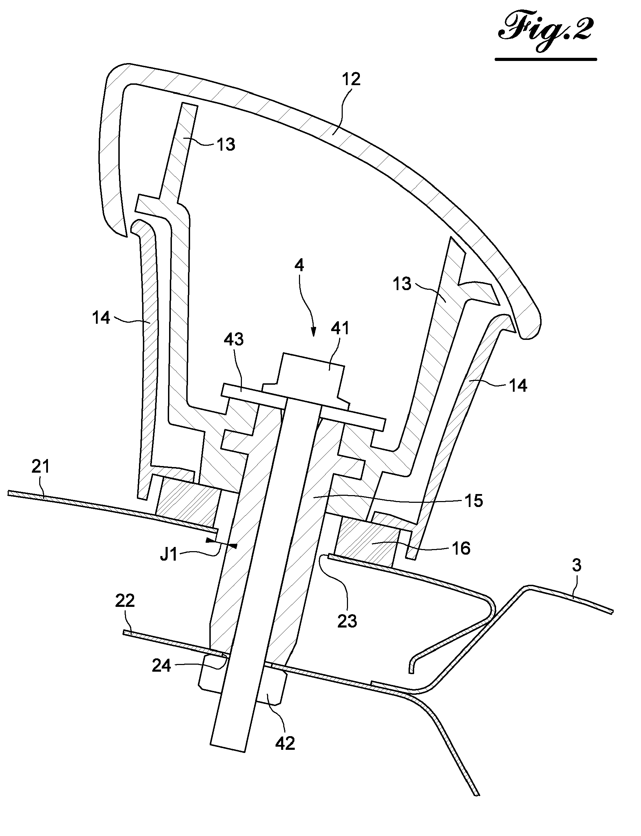

La figure 1 représente, en une vue en perspective, une barre de toit longitudinale 1 fixée sur le toit 2 d'un véhicule automobile. Le toit 2 comprend une tôle de pavillon 21 constituant la partie visible du toit et une doublure de pavillon 22 située en-dessous de la tôle de pavillon 21 et espacée de cette dernière. La doublure de pavillon 22 est solidaire des côtés de la caisse 3 du véhicule. La barre de toit 1 est fixée sur le toit 2 avec des moyens de fixation qui comportent des ensembles vis/écrou 4 (voir figure 2) mais sans liaison directe avec la tôle de pavillon 21.

En effet, comme cela ressort de la figure 1 et davantage en détails de la figure 2, la barre de toit 1 comprend un corps de barre 11 et un chapeau de barre 12 qui s'étendent sur la longueur entière de la barre de toit 1. La barre de toit 1 comprend en outre deux pieds 13, parfois même trois pieds, qui servent à la fois à un positionnement du corps de barre 11 à une distance au-dessus du toit 2 du véhicule et à la fixation de la barre de toit 1 sur le toit 2 du véhicule. Les pieds 13 et le corps 11 sont généralement réalisés en une seule pièce en une matière plastique rigide. Selon l'exemple de réalisation représenté, les pieds 13 sont pourvus de caches 14.

La figure 2 montre davantage en détails que la barre de toit 1 est fixée sur le toit 2 à travers les pieds 13 avec des moyens de fixation comportant, pour chacun des pieds 13, un des ensembles vis/écrou 4 et un fût de fixation 15 sous la forme d'un manchon et qui est réalisé en une matière incompressible, par exemple en acier. Le fût de fixation 15 prolonge le pied 13 dans le sens de l'axe de montage, c'est-à-dire perpendiculairement au plan général du toit 1. L'ensemble vis/écrou 4 comporte une vis 41, un écrou 42 et une rondelle 43. Et le fût de fixation 15 dont le diamètre intérieur n'est que légèrement plus grand que le diamètre nominal de la vis 41, est solidaire du pied 13, par exemple par surmoulage du fût de fixation 15 avec la matière plastique rigide du corps de barre 11 lors de la réalisation de ce dernier.

Pour la fixation de la barre de toit 1 sur le toit 2 du véhicule, la tôle de pavillon 21 est pourvue d'un orifice 23 que le fût de fixation 15 traverse pour prendre appui axialement sur la doublure de pavillon 22 et la doublure de pavillon 22 est pourvue d'un orifice 24 que la vis 41 traverse pour être engagée dans l'écrou 42 fixé sur la face inférieure de la doublure de pavillon 22, par exemple par soudage ou par sertissage. Le pied 13 ne prenant pas appui sur la tôle de pavillon 21, un joint d'étanchéité annulaire 16 est disposé sur le pourtour de l'orifice 23 et comprimé par le pied 13 lors de la fixation de la barre de toit 1.

Les positions des pieds 13 et en conséquence aussi celles des fûts de fixation 15 par rapport au corps de barre 11 et les positions des orifices 23 de la tôle de pavillon 21 étant soumises à des tolérances de fabrication, un jeu radial J1 est prévu de chaque côté des fûts de fixation 15 entre chacun des fûts de fixation 15 et le bord de l'orifice 23 correspondant pour obtenir une fixation correcte de la barre de toit 1 sur le toit 2 : dans le cas représenté d'une barre de toit 1 avec deux pieds 13, il s'agit de pouvoir fixer la barre de toit 1 parallèlement au bord du toit 2 et dans le cas d'une barre de toit à trois pieds, il s'y ajoute le besoin de compenser un défaut éventuel d'alignement des trois pieds et/ou des trois orifices entre eux. Le jeu J1 peut atteindre des valeurs de l'ordre de 3 mm.

Cependant, comme il a déjà été exposé plus haut, dans un montage conforme à celui de la figure 2, l'existence d'un jeu entre le fût de fixation 15 et le bord de l'orifice 23 confère à la barre de toit 1 une tendance au déversement. D'un autre côté, l'existence d'un jeu est nécessaire pour compenser les conséquences des tolérances de fabrication.

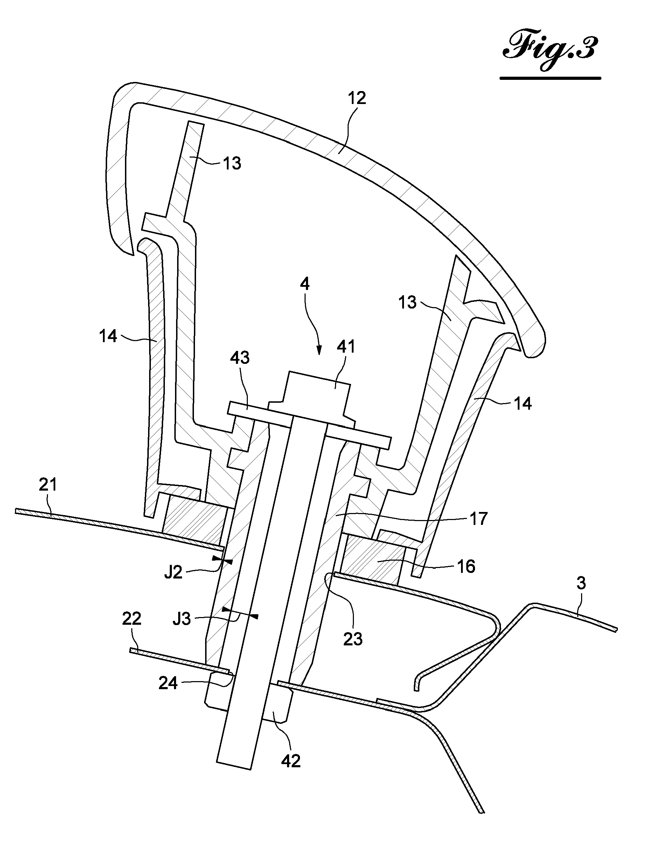

Comme cela ressort de la figure 3, la présente invention remédie à cette situation contradictoire en déplaçant le jeu de l'extérieur du fût de fixation vers l'intérieur de celui-ci. Ainsi, chaque fût de fixation est maintenu fermement dans les orifices de la tôle de pavillon 21 et ne bouge plus dans ces derniers sous la charge d'objets positionnés sur le toit 1.

Cette disposition de l'invention peut être obtenue de deux manières. Selon la première, on utilise les fûts de fixation 15 du montage de la figure 2 et on forme les orifices correspondants de la tôle de pavillon 21 avec un diamètre plus petit, sensiblement égal au diamètre extérieur des fûts de fixation 15. Selon la manière alternative, on conserve les orifices 23 et on utilise des fûts de fixation ayant un diamètre extérieur plus grand que dans le montage de la figure 2, c'est-à-dire sensiblement égal au diamètre des orifices 23. C'est cette seconde manière qui sera décrite ci-après.

En effet, la figure 3 représente - comme la figure 2 - la fixation d'une barre de toit 1 sur un toit 2 d'un véhicule automobile avec des moyens de fixation comportant, pour chacun des pieds 13 de la barre de toit 1, un ensemble vis/écrou 4 et un fût de fixation. Les mêmes numéros de référence sont utilisés pour les mêmes pièces ou éléments.

Ainsi, comme avant l'invention, le pied 13 est disposé sur la tôle de pavillon 21 par l'intermédiaire du joint d'étanchéité 16 entourant l'orifice 23 dans lequel est engagé un fût de fixation 17 solidaire, par exemple par surmoulage, du pied 13.

Du fait que l'on utilise un fût de fixation 17 ayant sensiblement le même diamètre que l'orifice 23, on obtient un jeu J2 entre le fût de fixation 17 et le bord de l'orifice 23, qui est idéalement zéro. Tenant compte des tolérances de fabrication, le jeu J2 sera pour le moins proche de zéro, c'est-à-dire qu'il ne dépasse pas 0,5 mm. Le fût de fixation 17 a en outre un diamètre intérieur nettement supérieur au diamètre nominal de la vis 41 et présente ainsi un jeu intérieur ou jeu de rattrapage J3 mesuré à partir de la position coaxiale de la vis 41 à l'intérieur du fût de fixation 17. Autrement dit, la différence entre le diamètre intérieur du fût de fixation 17 et le diamètre nominal de la vis 41 donne un jeu intérieur J3 dans un sens radial de chaque côté de la vis 41, au total donc un jeu de deux fois J3, qui permet d'effectuer les mêmes compensations et alignements que le jeu J1 de la solution antérieure à l'invention.

L'avantage de la présente invention est que l'outillage d'emboutissage pour la réalisation de la tôle de pavillon 21 n'a pas besoin d'être modifié et que seul le fût de fixation 15 de la conception antérieure doit être remplacé par le fût de fixation 17 selon l'invention, c'est-à-dire par une pièce en forme de manchon présentant des diamètres intérieur et extérieur plus grands que ceux du fût de fixation antérieur 15.

En outre, du fait de l'absence de jeu entre le fût de fixation 17 et le bord de l'orifice 23 de la tôle de pavillon 21, la reprise des efforts agissant sur la barre de toit 1 se fait instantanément sur la tôle de pavillon 21 dans l'orifice 23, ce qui évite tout mouvement de rotation de la barre de toit 1 autour de son axe longitudinal.

Et même si le jeu J2 n'est pas exactement zéro mais présente une valeur ne dépassant pas 0,5 mm, les conséquences pour la reprise des efforts par la tôle de pavillon 21 sont négligeable en raison de la distance relativement importante h entre la tôle de pavillon 21 et la doublure de pavillon 22, qui est de l'ordre de 20 mm.

Ainsi, avantageusement grâce aux dispositions de la présente invention, non seulement les fûts de fixation 17 d'une barre de toit 1 sont calés radialement dans leur orifice respectif mais, de plus, les vis 41 peuvent être correctement positionnées par rapport aux écrous 42 correspondants. En conséquence, les efforts de dévers ne sont plus essentiellement supportés par la doublure de pavillon mais répartis entre la tôle de pavillon, la doublure de pavillon et les fûts de fixation et il n'y a plus de tendance une rotation de chacune des barres de toit autour de leur axe longitudinal respectif.

## Revendications

1. Agencement de moyens de fixation d'un élément tel qu'une barre de toit (1) sur une structure à paroi double telle que le pavillon (2) d'un véhicule automobile, les moyens de fixation comprenant, pour chaque point de fixation (13) de l'élément (1) sur la structure (2), un fût de fixation (17) qui traverse une première (21) des deux parois (21, 22) de la structure (2) par un premier orifice (23) pour prendre appui sur la seconde (22) des deux parois (21, 22), et un ensemble vis/écrou (4) dont la vis (41) est logée à l'intérieur du fût de fixation (17) et dépasse des deux extrémités opposées du fût de fixation (17) de façon à traverser la seconde paroi (22) de la structure (2) par un second orifice (24), le fût de fixation (17) présentant un jeu entre la vis (41) de l'ensemble vis/écrou (4) et une face intérieure du fût de fixation (17), avec un diamètre extérieur du fût de fixation (17) qui est sensiblement égal au diamètre du premier orifice (23), de sorte que le fût de fixation (17) traverse le premier orifice (23) sensiblement sans jeu, **caractérisé en ce que** le fût de fixation (17) est solidaire de l'élément (1).

2. Agencement selon la revendication 1, **caractérisé en ce que** le fût de fixation (17) est réalisé en une matière incompressible.

3. Agencement selon la revendication 1 ou 2, **caractérisé en ce que** le fût de fixation (17) est une bague anti-fluage en acier permettant d'éviter la déformation des deux parois de la structure (2).

4. Agencement selon l'une quelconque des revendications 1 à 3, **caractérisé en ce que** le fût de fixation (17) est solidaire de l'élément (1) par surmoulage.

5. Agencement selon l'une quelconque des revendications 1 à 4, **caractérisé en ce que** l'écrou (42) de l'ensemble vis/écrou (4) est retenu en place sous la seconde paroi (22).

6. Agencement selon la revendication 5, **caractérisé en ce que** l'écrou (42) de l'ensemble vis/écrou (4) est serti sous la seconde paroi (22).

7. Agencement selon la revendication 5, **caractérisé en ce que** l'écrou (42) de l'ensemble vis/écrou (4) est soudé sous la seconde paroi (22).

8. Agencement selon l'une quelconque des revendications 1 à 7, **caractérisé en ce que** la différence entre que le diamètre extérieur du fût de fixation (17) et le diamètre du premier orifice (23) est inférieure à 0,5 mm.

9. Barre de toit (1) pour un véhicule automobile ayant un pavillon (2) à paroi double, comprenant au moins deux pieds (13) et un agencement de moyens de fixation selon l'une quelconque des revendications précédentes, où la barre de toit (1) forme l'élément, le pavillon (2) forme la structure à paroi double et où chaque pied (13) correspond à un point de fixation de la barre de toit (1) sur la structure (2).

10. Véhicule automobile équipé de deux barres de toit (1) longitudinales selon la revendication 9, le véhicule automobile ayant un pavillon (2) à paroi double et chacune des barres de toit (1) ayant au moins deux pieds (13) par lesquels elle est fixée sur le pavillon (2) à l'aide de l'agencement de moyens de fixation.

## Patentansprüche

1. Anordnung von Befestigungsmitteln eines Elements, wie zum Beispiel eines Dachgepäckträgerholms (1), auf einer Struktur mit doppelter Wand, wie zum Beispiel auf dem Dach (2) eines Kraftfahrzeugs, wobei die Befestigungsmittel für jede Befestigungsstelle (13) des Elements (1) auf der Struktur (2) einen Befestigungsschaft (17) umfassen, der eine erste (21) der zwei Wände (21, 22) der Struktur (2) durch eine erste Öffnung (23) durchquert, um sich auf die zweite (22) der zwei Wände (21, 22) zu stützen, und eine Einheit aus Schraube/Mutter (4), deren Schraube (41) im Inneren des Befestigungsschafts (17) aufgenommen ist und an den zwei entgegengesetzten Enden des Befestigungsschafts (17) derart herausragt, dass die zweite Wand (22) der Struktur (2) von einer zweiten Öffnung (24) durchquert wird, wobei der Befestigungsschaft (17) ein Spiel zwischen der Schraube (41) der Einheit aus Schraube/Mutter (4) und einer Innenseite des Befestigungsschafts (17) aufweist, mit einem Außendurchmesser des Befestigungsschafts (17), der im Wesentlichen gleich dem Durchmesser der ersten Öffnung (23) ist, so dass der Befestigungsschaft (17) die erste Öffnung (23) im Wesentlichen ohne Spiel durchquert, **dadurch gekennzeichnet, dass** der Befestigungsschaft (17) mit dem Element (1) fest verbunden ist.

2. Anordnung nach Anspruch 1, **dadurch gekennzeichnet, dass** der Befestigungsschaft (17) aus einem inkompressiblen Material hergestellt ist.

3. Anordnung nach Anspruch 1 oder 2, **dadurch gekennzeichnet, dass** der Befestigungsschaft (17) ein Knickschutzring ist, der es erlaubt, das Verformen der zwei Wände der Struktur (2) zu vermeiden.

4. Anordnung nach einem der Ansprüche 1 bis 3, **dadurch gekennzeichnet, dass** der Befestigungsschaft (17) fest mit dem Element (1) durch Überformen verbunden ist.

5. Anordnung nach einem der Ansprüche 1 bis 4, **dadurch gekennzeichnet, dass** die Mutter (42) der Einheit aus Schraube/Mutter (4) unter der zweiten Wand (22) an Ort und Stelle gehalten wird.

6. Anordnung nach Anspruch 5, **dadurch gekennzeichnet, dass** die Mutter (42) der Einheit aus Schraube/Mutter (4) unter der zweiten Wand (22) gefalzt ist.

7. Anordnung nach Anspruch 5, **dadurch gekennzeichnet, dass** die Mutter (42) der Einheit aus Schraube/Mutter (4) unter der zweiten Wand (22) geschweißt ist.

8. Anordnung nach einem der Ansprüche 1 bis 7, **dadurch gekennzeichnet, dass** der Unterschied zwischen dem Außendurchmesser des Befestigungsschafts (17) und dem Durchmesser der ersten Öffnung (23) kleiner ist als 0,5 mm.

9. Dachgepäckträgerholm (1) für Kraftfahrzeug, das ein Dach (2) mit doppelter Wand hat, der mindestens zwei Füße (13) und eine Anordnung von Befestigungsmitteln nach einem der vorhergehenden Ansprüche umfasst, wobei der Dachgepäckträgerholm (1) das Element bildet, das Dach (2) die Struktur mit doppelter Wand bildet, und wobei jeder Fuß (13) einer Befestigungsstelle des Dachgepäckträgerholms (1) auf der Struktur (2) entspricht.

10. Kraftfahrzeug, das mit zwei Dachgepäckträger-Längsholmen (1) nach Anspruch 9 ausgestattet ist, wobei das Kraftfahrzeug ein Dach (2) mit doppelter Wand hat, und wobei jeder der Dachgepäckträger-Längsholme (1) mindestens zwei Füße (13) hat, mit welchen er auf dem Dach (2) mit Hilfe der Befestigungsmittelanordnung befestigt ist.

## Claims

1. An arrangement of means for attaching an element such as a roof bar (1) on a double-walled structure such as the roof (2) of a motor vehicle, the attachment means including, for each attachment point (13) of the element (1) on the structure (2), an attachment shaft (17) which passes through a first (21) of the two walls (21, 22) of the structure (2) by a first orifice (23) to come to rest on the second (22) of the two walls (21, 22), and a screw/nut assembly (4), the screw (41) of which is housed in the interior of the attachment shaft (17) and goes beyond the two opposite ends of the attachment shaft (17) so as to pass through the second wall (22) of the structure (2) by a second orifice (24), the attachment shaft (17) having a play between the screw (41) of the screw/nut assembly (4) and an interior face of the attachment shaft (17), with an exterior diameter of the attachment shaft (17) which is substantially equal to the diameter of the first orifice (23), such that the attachment shaft (17) passes through the first orifice (23) substantially without play, **characterized in that** the attachment shaft (17) is integral with the element (1).

2. The arrangement according to claim 1, **characterized in that** the attachment shaft (17) is produced from a non-compressible material.

3. The arrangement according to claim 1 or 2, **characterized in that** the attachment shaft (17) is an anti-creep ring made of steel, allowing the prevention of the deformation of the two walls of the structure (2).

4. The arrangement according to any one of claims 1 to 3, **characterized in that** the attachment shaft (17) is integral with the element (1) by overmoulding.

5. The arrangement according to any one of claims 1 to 4, **characterized in that** the nut (42) of the screw/nut assembly (4) is retained in place under the second wall (22).

6. The arrangement according to claim 5, **characterized in that** the nut (42) of the screw/nut assembly (4) is crimped under the second wall (22).

7. The arrangement according to claim 5, **characterized in that** the nut (42) of the screw/nut assembly (4) is welded under the second wall (22).

8. The arrangement according to any one of claims 1 to 7, **characterized in that** the difference between the exterior diameter of the attachment shaft (17) and the diameter of the first orifice (23) is less than 0.5 mm.

9. A roof bar (1) for a motor vehicle having a double-walled roof (2), including at least two feet (13) and an arrangement of attachment means according to any one of the preceding claims, where the roof bar (1) forms the element, the roof (2) forms the double-walled structure and where each foot (13) corresponds to an attachment point of the roof bar (1) on the structure (2).

10. A motor vehicle equipped with two longitudinal roof bars (1) according to claim 9, the motor vehicle having a double-walled roof (2) and each of the roof bars (1) having at least two feet (13) by which it is fixed on the roof (2) by means of the arrangement of attachment means.
